# EUROPÄISCHE PATENTSCHRIFT

(11) **EP 3 552 798 B1**
(45) Veröffentlichungstag und Bekanntmachung des Hinweises auf die Patenterteilung: **14.04.2021**
(21) Anmeldenummer: 19159724.4
(22) Anmeldetag: 27.02.2019
(51) Int. Cl.: B29C 48/255, B29B 7/48, B29B 7/58, B29B 7/80, B29C 48/25, B29C 48/92

(54) **ANFAHRVENTIL-DROSSEL-VORRICHTUNG ZUM AUSTRAGEN EINER SCHMELZE AUS EINER SCHNECKENMASCHINE SOWIE ANLAGE ZUR AUFBEREITUNG VON SCHÜTTGUT MIT EINER DERARTIGEN ANFAHRVENTIL-DROSSEL-VORRICHTUNG UND VERFAHREN ZUM AUSTRAGEN EINER SCHMELZE AUS EINER SCHNECKENMASCHINE MITTELS EINER DERARTIGEN ANFAHRVENTIL-DROSSEL-VORRICHTUNG**
STARTUP VALVE THROTTLE DEVICE FOR DISCHARGING A MELT FROM A WORM MACHINE AND INSTALLATION FOR PROCESSING BULK MATERIAL WITH SUCH A STARTUP VALVE THROTTLE DEVICE AND METHOD FOR DISCHARGING A MELT FROM A WORM MACHINE USING SUCH A STARTUP VALVE THROTTLE DEVICE
DISPOSITIF DE SOUPAPE DE DÉMARRAGE ET D'ÉTRANGLEMENT PERMETTANT DE DÉCHARGER UNE FONTE D'UNE MACHINE À VIS SANS FIN AINSI QU'INSTALLATION DE TRAITEMENT DE MATIÈRE EN VRAC DOTÉ D'UN UN TEL DISPOSITIF DE SOUPAPE DE DÉMARRAGE ET D'ÉTRANGLEMENT ET PROCÉDÉ DE DÉCHARGE D'UNE FONTE D'UNE MACHINE À VIS SANS FIN AU MOYEN D'UN TEL DISPOSITIF DE SOUPAPE DE DÉMARRAGE ET D'ÉTRANGLEMENT

(30) Priorität: 26.03.2018 DE 102018204584
(43) Veröffentlichungstag der Anmeldung: 16.10.2019
(73) Patentinhaber: Coperion GmbH, 70469 Stuttgart (DE)
(72) Erfinder: Schmid, Michael, 84030 Ergolding (DE); Kiern, Stephan, 84028 Landshut (DE); Kühn, Ralf, 74391 Erligheim (DE); Schmudde, Markus, 71711 Steinheim a.d. Murr (DE); Tratnik, Tomi, 71634 Ludwigsburg (DE)
(74) Vertreter: Rau, Schneck & Hübner Patentanwälte Rechtsanwälte PartGmbB

(56) Entgegenhaltungen:
- CN-A- 101 235 914
- DE-B- 1 231 001
- DE-C1- 3 815 897
- DE-U1-202009 011 114
- JP-A- 2000 246 780
- JP-A- 2012 183 691

## Beschreibung

Die Erfindung betrifft eine Anfahrventil-Drossel-Vorrichtung zum Austragen einer Schmelze aus einer Schneckenmaschine sowie eine Anlage zur Aufbereitung von Schüttgut mit einer Anfahrventil-Drossel-Vorrichtung. Ferner betrifft die Erfindung ein Verfahren zum Austragen einer Schmelze mittels einer Anfahrventil-Drossel-Vorrichtung.

Aus der DE 38 15 897 C1 (entspricht US 4 984 977 A) ist eine Schneckenmaschine mit einer daran angeflanschten Anfahrventil-Drossel-Vorrichtung bekannt. Die Anfahrventil-Drossel-Vorrichtung umfasst ein Gehäuse mit einer darin ausgebildeten Gehäuseausnehmung, in der ein Anfahrventil-Drossel-Körper angeordnet ist. Der Anfahrventil-Drossel-Körper weist zwei kreiszylindrische Verschließabschnitte auf, zwischen denen ein Drosselkörper angeordnet ist. An einem der Verschließabschnitte ist ein Anfahrventilkörper ausgebildet, der teilzylindrisch ausgebildet ist. Die Anfahrventil-Drossel-Vorrichtung umfasst ferner einen Schwenkantrieb zum Verschwenken des Anfahrventil-Drossel-Körpers um eine Längsachse sowie einen Linearantrieb zum Verschieben des Anfahrventil-Drossel-Körpers in Richtung der Längsachse. In einer ersten Endlage des Linearantriebs wird der Anfahrventil-Drossel-Körper als Anfahrventil betrieben, so dass durch einen Eintrittskanal zugeführte Schmelze durch eine Anfahr-Auslassöffnung ausgetragen wird. In einer zweiten Endlage des Linearantriebs verschließen die Verschließabschnitte die Gehäuseausnehmung, so dass die Anfahr-Auslassöffnung verschlossen ist und der Drosselkörper in der Drosselstellung ist. Durch Verschwenken des Anfahrventil-Drossel-Körpers um die Längsachse mittels des Schwenkantriebs wird das Austragen der durch den Eintrittskanal zugeführten Schmelze in Richtung eines Austragskanals mittels des Drosselkörpers gedrosselt. Nachteilig ist, dass der Aufbau und die Betrieb der Anfahrventil-Drossel-Vorrichtung kompliziert sind.

Der Erfindung liegt die Aufgabe zugrunde, eine Anfahrventil-Drossel-Vorrichtung zu schaffen, die einfach und zuverlässig aufgebaut ist und einen einfachen und energieeffizienten Betrieb ermöglicht.

Diese Aufgabe wird durch eine Anfahrventil-Drossel-Vorrichtung mit den Merkmalen des Anspruchs 1 gelöst. Dadurch, dass in dem Durchgangskanal ein Drosselkörper relativ zu dem Schaltkörper verlagerbar angeordnet ist, ist der Drosselkörper unabhängig von dem Schaltkörper betätigbar. In der Austragsstellung ist somit ein einfaches und energieeffizientes Drosseln der Schmelze möglich, ohne dass eine Verlagerung des Schaltkörpers erforderlich ist. Dadurch, dass der Drosselkörper unabhängig von dem Schaltkörper betätigbar ist, vereinfacht sich zudem der antriebsseitige Aufbau der Anfahrventil-Drossel-Vorrichtung.

Der Drosselkörper ist vorzugsweise als Drosselklappe bzw. als Flügeldrossel ausgebildet. Die Drosselklappe bildet eine Drosselvorderseite und eine Drosselrückseite aus, die über eine Drosselstirnseite miteinander verbunden sind. Die Drosselvorderseite bzw. die Drosselrückseite weist im Vergleich zu der Drosselstirnseite einen größeren Strömungswiderstand in Bezug auf die Schmelze auf. In einer Maximaldrosselstellung wird mittels der Drosselvorderseite ein maximaler Strömungswiderstand eingestellt, wohingegen in einer Minimaldrosselstellung mittels der Drosselstirnseite ein minimaler Strömungswiderstand eingestellt wird.

Ist der Schaltkörper mehrteilig ausgebildet, so ist der Drosselkörper relativ zu mindestens einem Schaltkörper-Bauteil verlagerbar in dem Durchgangskanal angeordnet. Relativ zu mindestens einem Schaltkörper-Bauteil kann der Drosselkörper nicht verlagerbar angeordnet sein. Der Schaltkörper kann beispielsweise zweiteilig ausgebildet sein und ein erstes Schaltkörper-Bauteil und ein zweites Schaltkörper-Bauteil umfassen. Der Drosselkörper ist relativ zu dem ersten Schaltkörper-Bauteil verlagerbar in dem Durchgangskanal angeordnet. Das zweite Schaltkörper-Bauteil ist mit der Drosselkörper-Antriebswelle verbunden, sodass der Drosselkörper relativ zu dem zweiten Schaltkörper-Bauteil nicht verlagerbar ist. Das zweite Schaltkörper-Bauteil bildet einen Ausschleuskanal und/oder einen freien Durchgangskanal aus. In dem freien Durchgangskanal ist kein Drosselkörper angeordnet.

Dadurch, dass der Drosselkörper mittels eines eigenen Drosselkörper-Antriebs verlagerbar ist, ist ein einfach aufgebauter und zuverlässiger Drosselkörper-Antrieb verwendbar. Der Drosselkörper-Antrieb muss den Schaltkörper nicht verlagern, so dass der Drosselkörper-Antrieb ausschließlich auf die Verlagerung des Drosselkörpers auslegbar und optimierbar ist. Vorzugsweise ist der Drosselkörper-Antrieb ein elektrischer Antriebsmotor, der den Drosselkörper um eine Drosselkörper-Schwenkachse verschwenkt. Der Drosselkörper-Antrieb ist an dem Gehäuse oder an dem Schaltkörper befestigt.

Eine Anfahrventil-Drossel-Vorrichtung nach Anspruch 2 gewährleistet einen einfachen und energieeffizienten Betrieb. Dadurch, dass der Drossel-körper um die Drosselkörper-Schwenkachse in dem Durchgangskanal verschwenkbar ist, ist in der Austragsstellung ein Drosseln der Schmelze in einfacher und schneller Weise möglich. Das Verändern der Stellung des Drosselkörpers ist aufgrund einer geringen zu bewegenden Masse vergleichsweise energieeffizient. In einer Minimaldrosselstellung des Drossel-körpers ist der Druckverlust gering, sodass die Schneckenmaschine energieeffizient betreibbar ist. Vorzugsweise ist der Drosselkörper verschwenkbar an dem Schaltkörper gelagert. Die Lagerung des Drosselkörpers ist insbesondere abgedichtet ausgeführt, so dass aufgrund der Lagerung keine Schmelze entweichen kann.

Eine Anfahrventil-Drossel-Vorrichtung nach Anspruch 3 gewährleistet einen einfachen Aufbau und einen einfachen Betrieb. Dadurch, dass der Drosselkörper-Antrieb an dem Schaltkörper befestigt ist, wird der Drossel-körper-Antrieb mit dem Schaltkörper verlagert, so dass der Drosselkörper-Antrieb und der Drosselkörper aufgrund der Verlagerung des Schaltkörpers von der Ausschleusstellung in die Austragsstellung keine Relativbewegung zu dem Schaltkörper ausführen. Der Drosselkörper-Antrieb ist vorzugsweise als elektrischer Antriebsmotor ausgebildet, so dass die Verlagerung des Schaltkörpers in einfacher Weise über die elektrischen Leitungen kompensierbar ist.

Eine Anfahrventil-Drossel-Vorrichtung nach Anspruch 4 gewährleistet einen einfachen und zuverlässigen Aufbau. Durch die Drosselkörper-Antriebswelle ist der Drosselkörper, insbesondere beidseitig, gelagert. Die Drosselkörper-Antriebswelle ermöglicht zudem eine einfache Montage des Drosselkörpers in dem Durchgangskanal. Die Drosselkörper-Antriebswelle ist vorzugsweise gegenüber dem Schaltkörper abgedichtet. Vorzugsweise ist die Drosselkörper-Antriebswelle beidseitig des Drosselkörpers in dem Schaltkörper abgedichtet und verschwenkbar gelagert. Die Drosselkörper-Antriebswelle ist insbesondere derart frei zugänglich, dass ein Drosselkörper-Antrieb zum Verlagern des Drosselkörpers mit der Drosselkörper-Antriebswelle verbindbar ist. Der Drosselkörper ist drehfest an der Drosselkörper-Antriebswelle befestigt.

Eine Anfahrventil-Drossel-Vorrichtung nach Anspruch 5 gewährleistet einen zuverlässigen Aufbau. Durch die exzentrische Befestigung des Drosselkörpers an der Drosselkörper-Antriebswelle können in der Strömungsrichtung der Schmelze wirkende Druckkräfte aufgrund einer größeren Wandstärke zuverlässig aufgenommen werden. Eine unzulässige Biegung in Folge von Druckkräften wird hierdurch vermieden. Vorzugsweise ist der Drosselkörper als Drosselklappe ausgebildet und die Drosselklappe derart exzentrisch an der Drosselkörper-Antriebswelle befestigt, dass eine Wandstärke zwischen der Drosselkörper-Antriebswelle und einer Drosselvorderseite größer ist als eine Wandstärke zwischen der Drosselkörper-Antriebswelle und einer Drosselrückseite. Durch die größere Wandstärke an der stromaufwärtigen Drosselvorderseite werden die stromaufwärts wirkenden Druckkräfte zuverlässig aufgenommen.

Eine Anfahrventil-Drossel-Vorrichtung nach Anspruch 6 gewährleistet einen einfachen und energieeffizienten Betrieb. Durch die sich zumindest abschnittsweise vergrößernde Querschnittsfläche des Durchgangskanals wird in einer Minimaldrosselstellung des Drosselkörpers ein geringer Strömungswiderstand und somit ein geringer Druckaufbau bzw. Druckverlust ermöglicht. Die Querschnittsfläche des Drosselkörpers wird in der Minimaldrosselstellung zumindest teilweise von der sich vergrößernden Querschnittsfläche des Durchgangskanals kompensiert. Ein Druckverlust an dem Drosselkörper wird in der Minimaldrosselstellung somit im Wesentlichen vermieden, so dass ein einfacher und energieeffizienter Betrieb möglich ist. Auf eine Schmelzepumpe zum Druckaufbau stromabwärts der Anfahrventil-Drossel-Vorrichtung kann insbesondere verzichtet werden. Vorzugsweise ist der Drosselkörper als Drosselklappe ausgebildet, die eine Drosselvorderseite und eine Drosselrückseite sowie eine diese verbindende Drosselstirnseite umfasst. Insbesondere verlaufen die Drosselvorderseite und die Drosselrückseite ausgehend von der Drosselstirnseite - im Querschnitt und senkrecht zu der Drosselkörper-Schwenkachse betrachtet - bis zu der Drosselkörper-Schwenkachse zumindest abschnittsweise keilförmig zueinander. Vorzugsweise ist die Drosselstirnseite - im Querschnitt und senkrecht zu der Drosselkörper-Schwenkachse betrachtet - gekrümmt ausgebildet. Hierdurch wird in der Minimaldrosselstellung der Strömungswiderstand der Drosselklappe optimiert.

Eine Anfahrventil-Drossel-Vorrichtung nach Anspruch 7 gewährleistet einen einfachen und energieeffizienten Betrieb. Durch das Verhältnis der freien Strömungsquerschnittsflächen A₂/A₁ wird ein geringer Strömungswiderstand und ein geringer Druckaufbau bzw. Druckverlust in der Minimaldrosselstellung gewährleistet. Die freie Strömungsquerschnittsfläche A₂ bezieht sich insbesondere auf eine Schnittebene, die durch die Drosselkörper-Schwenkachse und senkrecht zu einer Strömungsrichtung bzw. Förderrichtung der Schmelze verläuft. Die Schnittebene ist insbesondere parallel zu einer durch die Eintrittsöffnung definierten Schnittebene, die senkrecht zu der Strömungsrichtung bzw. Förderrichtung verläuft. Vorzugsweise ist der Drosselkörper als Drosselklappe ausgebildet. In der Minimaldrosselstellung verlaufen eine Drosselvorderseite und eine Drosselrückseite im Wesentlichen parallel zu der Strömungsrichtung, so dass eine die Drosselvorderseite und die Drosselrückseite verbindende Drosselstirnseite im Wesentlichen den Strömungswiderstand bestimmt.

Eine Anfahrventil-Drossel-Vorrichtung nach Anspruch 8 gewährleistet einen einfachen Aufbau und Betrieb. Dadurch, dass der Schaltkörper mittels eines eigenen Schaltkörper-Antriebs verlagerbar ist, sind der antriebsseitige Aufbau und das Verlagern des Schaltkörpers einfach. Der Schaltkörper-Antrieb ist insbesondere als elektrischer Antriebsmotor ausgebildet. Der Schaltkörper-Antrieb ist vorzugsweise an dem Gehäuse befestigt. Hierdurch ist der Schaltkörper-Antrieb in einfacher Weise betätigbar. Der Schaltkörper-Antrieb ist als Linearantrieb oder als rotatorischer Antrieb ausgebildet.

Eine Anfahrventil-Drossel-Vorrichtung nach Anspruch 9 gewährleistet einen einfachen Betrieb. Der Schaltkörper ist bei einer ersten Ausführungsform entlang der Schaltkörper-Verlagerungsachse linear verlagerbar. Bei einer zweiten Ausführungsform ist der Schaltkörper um die Schaltkörper-Verlagerungsachse verschwenkbar.

Eine Anfahrventil-Drossel-Vorrichtung nach Anspruch 10 gewährleistet einen einfachen Aufbau und Betrieb. Dadurch, dass die Drosselkörper-Schwenkachse parallel zu der Schaltkörper-Verlagerungsachse verläuft, ist ein einfaches Umschalten zwischen der Ausschleusstellung und der Austragsstellung möglich. Wird der Schaltkörper zwischen der Ausschleusstellung und der Austragsstellung linear verlagert, so beeinträchtigt ein Drosselkörper-Antrieb und/oder eine Drosselkörper-Antriebswelle das Umschalten zwischen der Ausschleusstellung und der Austragsstellung nicht. Wird der Schaltkörper zwischen der Ausschleusstellung und der Austragsstellung um die Schaltkörper-Verlagerungsachse verschwenkt, so wird das Verschwenken durch einen Drosselkörper-Antrieb und/oder eine Drossel-körper-Antriebswelle nicht beeinträchtigt.

Eine Anfahrventil-Drossel-Vorrichtung nach Anspruch 11 gewährleistet einen einfachen Aufbau sowie einen einfachen und energieeffizienten Betrieb. Der Schaltkörper ist in der Gehäuseausnehmung verschwenkbar gelagert. Die Schaltkörper-Verlagerungsachse ist eine Schaltkörper-Schwenkachse. Vorzugsweise ist der Schaltkörper in der Gehäuseausnehmung in Richtung der Schaltkörper-Verlagerungsachse fixiert. Der Schaltkörper ist zum Umschalten zwischen der Ausschleusstellung und der Austragsstellung insbesondere um mindestens 90° um die Schaltkörper-Verlagerungsachse verschwenkbar. Vorzugsweise ist die Schaltkörper-Verlagerungsachse horizontal oder vertikal ausgerichtet.

Eine Anfahrventil-Drossel-Vorrichtung nach Anspruch 12 gewährleistet einen einfachen Aufbau sowie einen einfachen und energieeffizienten Betrieb. Der Schaltkörper ist in der Gehäuseausnehmung linear verlagerbar angeordnet. Das Umschalten zwischen der Ausschleusstellung und der Austragsstellung erfolgt durch lineares Verlagern des Schaltkörpers entlang der Schaltkörper-Verlagerungsachse in der Gehäuseausnehmung. Vorzugsweise ist die Schaltkörper-Verlagerungsachse horizontal oder vertikal ausgerichtet.

Eine Anfahrventil-Drossel-Vorrichtung nach Anspruch 13 gewährleistet einen energieeffizienten Betrieb. Dadurch, dass in dem Schaltkörper zusätzlich ein freier Durchgangskanal ausgebildet ist, kann der Schaltkörper in eine ungedrosselte Austragsstellung verlagert werden. In dem freien Durchgangskanal ist kein Drosselkörper angeordnet, sodass die Schmelze in der ungedrosselten Austragsstellung ungehindert durch den freien Durchgangskanal strömen kann. Hierdurch wird im Wesentlichen kein Druckverlust verursacht. Der Betrieb der Schneckenmaschine sowie der Anfahrventil-Drossel-Vorrichtung ist somit energieeffizient.

Der Erfindung liegt ferner die Aufgabe zugrunde, eine Anlage zur Aufbereitung von Schüttgut zu schaffen, die einfach und zuverlässig aufgebaut ist und einen einfachen und energieeffizienten Betrieb ermöglicht.

Diese Aufgabe wird durch eine Anlage mit den Merkmalen des Anspruchs 14 gelöst. Die Schneckenmaschine ist insbesondere als Mehrwellen-Schneckenmaschine, vorzugsweise als Zweiwellen-Schneckenmaschine ausgebildet. Die Behandlungselementwellen der Schneckenmaschine sind insbesondere gleichsinnig drehantreibbar bzw. drehangetrieben. Die Behandlungselementwellen sind vorzugsweise einander dichtkämmend ausgebildet. Die Anlage umfasst insbesondere eine Steuereinrichtung, die den Betrieb der Schneckenmaschine und/oder der Anfahrventil-Drossel-Vorrichtung steuert. Die Steuereinrichtung steuert insbesondere das Verlagern des Schaltkörpers zwischen der Ausschleusstellung und der Austragsstellung und/oder das Verlagern des Drosselkörpers in dem Durchgangskanal relativ zu dem Schaltkörper zum Drosseln der Schmelze.

Der Erfindung liegt ferner die Aufgabe zugrunde, ein Verfahren zu schaffen, das ein einfaches und energieeffizientes Austragen einer Schmelze mittels einer Anfahrventil-Drossel-Vorrichtung ermöglicht.

Diese Aufgabe wird durch ein Verfahren mit den Merkmalen des Anspruchs 15 gelöst. Die Vorteile des erfindungsgemäßen Verfahrens entsprechen den bereits beschriebenen Vorteilen der erfindungsgemäßen Anfahrventil-Drossel-Vorrichtung. Das erfindungsgemäße Verfahren kann insbesondere auch die Bereitstellung einer Anlage zur Aufbereitung von Schüttgut gemäß Anspruch 14 umfassen.

Ein Verfahren nach Anspruch 16 gewährleistet ein einfaches und zuverlässiges Austragen der Schmelze. Dadurch, dass der Schaltkörper im Betrieb wiederholt geringfügig aus der Austragsstellung verlagert, also geringfügig verschwenkt oder geringfügig linear verlagert wird, und anschließend wieder in die Austragsstellung gebracht wird, wird vermieden, dass Schmelze, die während des Anfahrvorgangs in einem Spalt zwischen dem Schaltkörper und dem Gehäuse gelangt ist und dort über einen längeren Zeitraum verbleibt und im Spalt verhärtet, die Bewegung des Schaltkörpers dauerhaft blockiert. Durch das geringfügige Verlagern bzw. durch die beschriebene Mikrobewegung des Schaltkörpers wird das aus dem Verhärten der Schmelze entstandene Material in dem Spalt gelöst. Hierdurch wird ein Blockieren des Schaltkörpers einfach und zuverlässig vermieden.

Weitere Merkmale, Vorteile und Einzelheiten der Erfindung ergeben sich aus der nachfolgenden Beschreibung mehrerer Ausführungsbeispiele. Es zeigen:
- Fig. 1: eine schematische Darstellung einer Anlage zur Aufbereitung von Schüttgut mit einer Mehrwellen-Schneckenmaschine und einer daran angeflanschten Anfahrventil-Drossel-Vorrichtung gemäß einem ersten Ausführungsbeispiel,
- Fig. 2: einen Schnitt durch die Anfahrventil-Drossel-Vorrichtung in Fig. 1 in einer Ausschleusstellung,
- Fig. 3: einen Schnitt durch die Anfahrventil-Drossel-Vorrichtung in Fig. 1 in einer Austragsstellung,
- Fig. 4: einen Schnitt durch die Anfahrventil-Drossel-Vorrichtung entlang der Schnittlinie IV-IV in Fig. 3 in einer Minimaldrosselstellung eines Drosselkörpers,
- Fig. 5: einen Schnitt durch die Anfahrventil-Drossel-Vorrichtung entsprechend Fig. 4 in einer Maximaldrosselstellung des Drosselkörpers,
- Fig. 6: einen Schnitt durch eine Anfahrventil-Drossel-Vorrichtung gemäß einem zweiten Ausführungsbeispiel in einer Ausschleusstellung,
- Fig. 7: einen Schnitt durch die Anfahrventil-Drossel-Vorrichtung gemäß dem zweiten Ausführungsbeispiel in einer Austragsstellung,
- Fig. 8: einen Schnitt durch eine Anfahrventil-Drossel-Vorrichtung gemäß einem dritten Ausführungsbeispiel in einer ungedrosselten Austragsstellung, und
- Fig. 9: einen Schnitt durch eine Anfahrventil-Drossel-Vorrichtung gemäß einem vierten Ausführungsbeispiel in einer Ausschleusstellung.

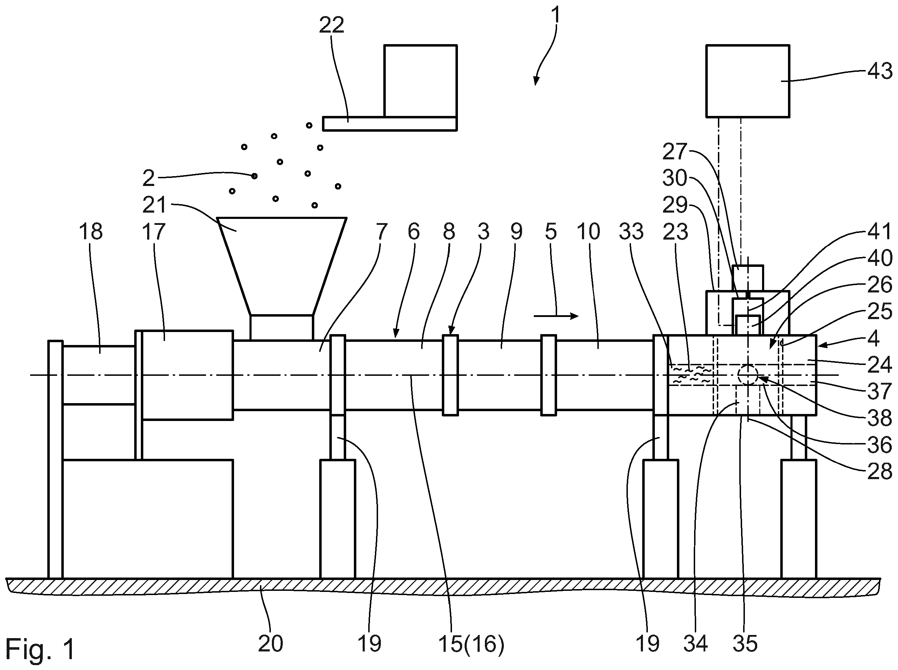

Nachfolgend ist anhand der Fig. 1 bis 5 ein erstes Ausführungsbeispiel der Erfindung beschrieben. Eine Anlage 1 zur Aufbereitung von Schüttgut 2 umfasst eine Mehrwellen-Schneckenmaschine 3 und eine Anfahrventil-Drossel-Vorrichtung 4, die in einer Förderrichtung 5 nach der Mehrwellen-Schneckenmaschine 3 angeordnet ist.

Die Mehrwellen-Schneckenmaschine 3 ist als Zweiwellen-Schneckenmaschine ausgebildet. Die Schneckenmaschine 3 weist ein Gehäuse 6 auf, das mehrere nacheinander angeordnete und aneinander befestigte Gehäuseabschnitte 7, 8, 9, 10 umfasst. In dem Gehäuse 6 sind zwei achsparallele Gehäusebohrungen 11, 12 ausgebildet, die einander durchdringen und im Querschnitt die Form einer liegenden Acht haben. In den Gehäusebohrungen 11, 12 sind zwei einander dichtkämmende Behandlungselementwellen 13, 14 angeordnet und um zugehörige Drehachsen 15, 16 drehantreibbar. Die Behandlungselementwellen 13, 14 werden über ein Verteilergetriebe 17 von einem Antriebsmotor 18 gleichsinnig, also in gleichen Drehrichtungen drehangetrieben. Die Anfahrventil-Drossel-Vorrichtung 4, das Gehäuse 6, das Verteilergetriebe 17 und der Antriebsmotor 18 sind über Ständer 19 an einem Fundament 20 befestigt.

In den ersten als Einzugszone ausgebildeten Gehäuseabschnitt 7 mündet ein Einlasstrichter 21 ein, in den das aufzubereitende Schüttgut 2 über eine Dosiereinrichtung 22 in die Schneckenmaschine 3 zugeführt wird. Die Behandlungselementwellen 13, 14 bilden in der Schneckenmaschine 3 eine Knetzone aus, in der das Schüttgut 2 zu einer Schmelze 23 aufgeschmolzen wird. Die Schmelze 23 wird der Anfahrventil-Drossel-Vorrichtung 4 zugeführt, die an dem letzten Gehäuseabschnitt 10 angeflanscht ist.

Die Anfahrventil-Drossel-Vorrichtung 4 umfasst ein Gehäuse 24, in dem eine zylinderförmige Gehäuseausnehmung 25 ausgebildet ist. In der Gehäuseausnehmung 25 ist ein entsprechend zylinderförmig ausgebildeter Schaltkörper 26 angeordnet, der mittels eines Schaltkörper-Antriebs 27 in der Gehäuseausnehmung 25 um eine Schaltkörper-Verlagerungsachse 28 verschwenkbar ist. Der Schaltkörper 26 ist in Richtung der Schaltkörper-Verlagerungsachse 28 fest angeordnet, also nicht verlagerbar.

Der Schaltkörper-Antrieb 27 ist als elektrischer Antriebsmotor ausgebildet. Der Schaltkörper-Antrieb 27 ist mittels eines Befestigungsgestells 29 an dem Gehäuse 24 befestigt. Der Schaltkörper-Antrieb 27 ist zum Verschwenken des Schaltkörpers 26 um die Schaltkörper-Verlagerungsachse 28 mittels einer Schaltkörper-Antriebswelle 30 verbunden. Der Schaltkörper 26 ist mittels ringförmiger Lager- und Dichteinheiten 31, 32 verschwenkbar und gegenüber der Schmelze 23 abgedichtet in der Gehäuseausnehmung 25 gelagert.

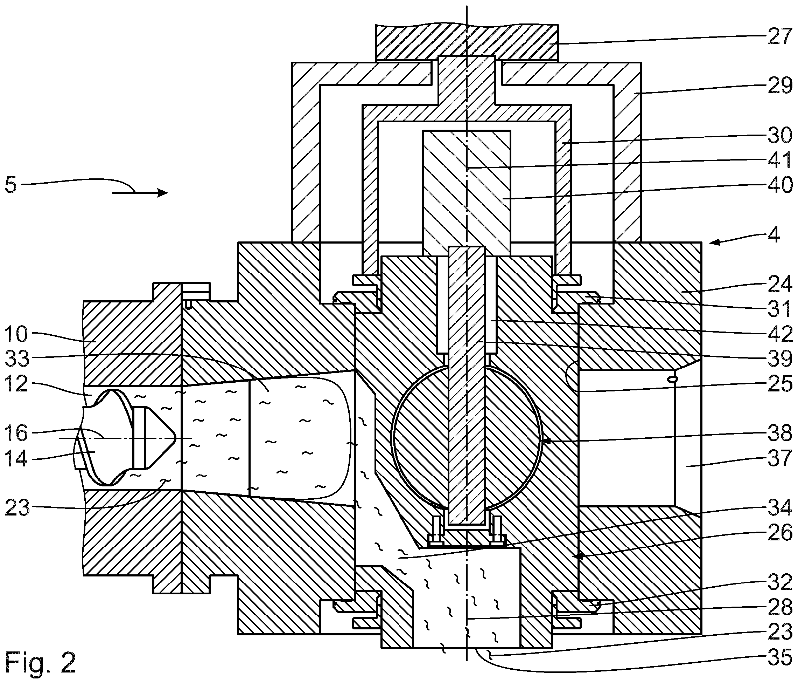

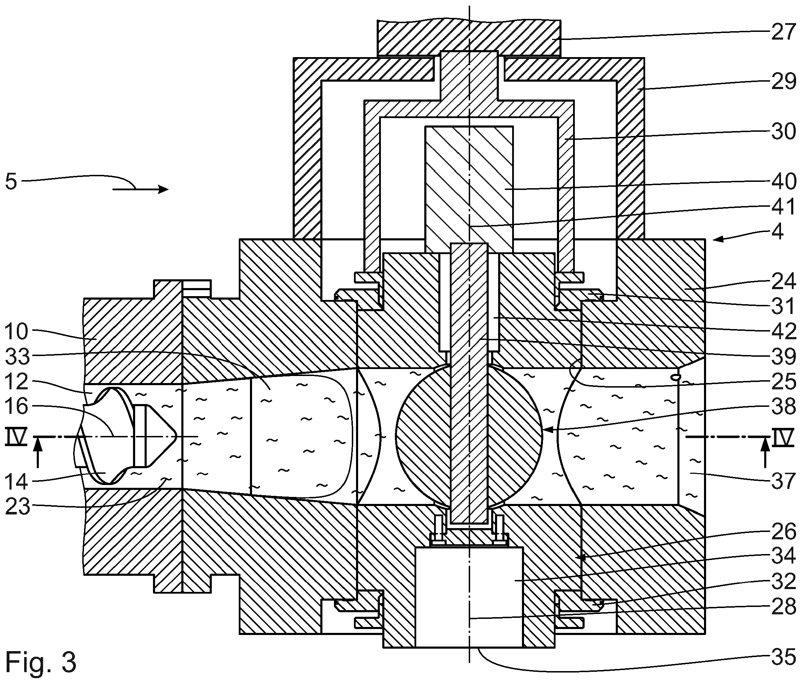

In dem Gehäuse 24 ist ein Eintrittskanal 33 ausgebildet, der die Gehäusebohrungen 11, 12 mit der Gehäuseausnehmung 25 verbindet. Der Eintrittskanal 33 dient zum Zuführen der Schmelze 23 zu dem Schaltkörper 26. Der Schaltkörper 26 ist zwischen einer in Fig. 2 veranschaulichten Ausschleusstellung und einer in Fig. 3 veranschaulichten Austragsstellung verschwenkbar. Zum Umschalten zwischen der Ausschleusstellung und der Austragsstellung ist der Schaltkörper 26 um mindestens 90° um die Schaltkörper-Verlagerungsachse 28 verschwenkbar.

Der Schaltkörper 26 bildet einen Ausschleuskanal 34 aus, der eine Ausschleusöffnung 35 begrenzt und in der Ausschleusstellung den Eintrittskanal 33 mit der Umgebung verbindet. Der Schaltkörper 26 bildet ferner einen Durchgangskanal 36 aus, der in der Austragsstellung den Eintrittskanal 33 mit einem Austragskanal 37 verbindet. Der Anfahrventil-Drossel-Vorrichtung 4 ist beispielsweise eine Granuliereinrichtung nachgeordnet, der die aus dem Austragskanal 37 ausgetragene Schmelze 23 zugeführt wird.

In dem Durchgangskanal 36 ist ein Drosselkörper 38 angeordnet, der relativ zu dem Schaltkörper 26 verlagerbar ist. Der Drosselkörper 38 ist drehfest mit einer Drosselkörper-Antriebswelle 39 verbunden. Die Drosselkörper-Antriebswelle 39 ist beidseitig des Drosselkörpers 38 verschwenkbar und abgedichtet an dem Schaltkörper 26 gelagert. Der Drosselkörper 38 ist mittels eines Drosselkörper-Antriebs 40 um eine Drosselkörper-Schwenkachse 41 verschwenkbar. Die Drosselkörper-Schwenkachse 41 verläuft konzentrisch zu der Schaltkörper-Schwenkachse 28. Der Drossel-körper-Antrieb 40 ist als elektrischer Antriebsmotor ausgebildet. Der Drosselkörper-Antrieb 40 ist an dem Schaltkörper 26 befestigt. Hierzu bildet der Befestigungsrahmen 29 sowie die Schaltkörper-Antriebswelle 30 den erforderlichen Bauraum aus. Zum Verbinden der Drosselkörper-Antriebswelle 39 mit dem Drosselkörper-Antrieb 40 erstreckt sich die Drosselkörper-Antriebswelle 39 durch eine Aufnahmebohrung 42, die in dem Schaltkörper 26 ausgebildet ist.

Zum Ansteuern des Schaltkörper-Antriebs 27 und des Drosselkörper-Antriebs 40 umfasst die Anlage 1 bzw. die Anfahrventil-Drossel-Vorrichtung 4 eine Steuereinrichtung 43.

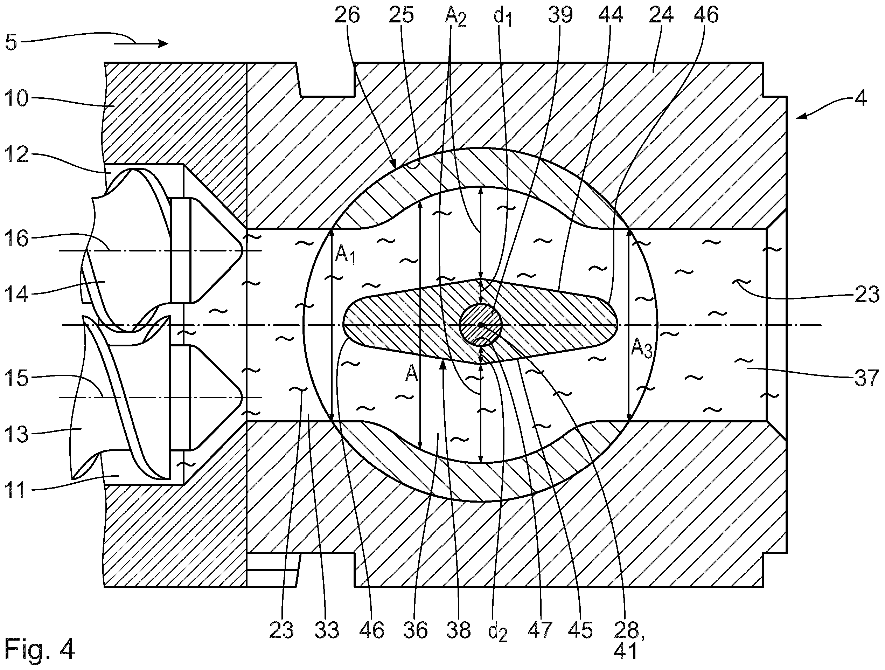

Der Drosselkörper 38 ist als Drosselklappe ausgebildet. Die Drosselklappe wird auch als Flügeldrossel bezeichnet. Der Drosselkörper 38 weist eine Drosselvorderseite 44, eine Drosselrückseite 45 und eine diese verbindende Drosselstirnseite 46 auf. Die Drosselvorderseite 44 und die Drosselrückseite 46 sind im Wesentlichen in Form einer Kreisscheibe ausgebildet. Die Drosselstirnseite 46 ist im Wesentlichen ringförmig ausgebildet und verbindet die Drosselvorderseite 44 und die Drosselrückseite 45 zu dem scheibenförmigen Drosselkörper 38. In dem Drosselkörper 38 ist eine Wellenbohrung 47 ausgebildet, die sich durch die umlaufende Drosselstirnseite 46 erstreckt. Der Drosselkörper 38 ist derart exzentrisch an der Drosselkörper-Antriebswelle 39 befestigt, dass eine Wandstärke d₁ des Drosselkörpers 38 zwischen der Wellenbohrung 47 und der Drosselvorderseite 44 größer ist als eine Wandstärke d₂ zwischen der Wellenbohrung 47 und der Drosselrückseite 45. Die Drosselvorderseite 44 und die Drosselrückseite 45 verlaufen ausgehend von der Drosselstirnseite 46 bis zu der Drosselkörper-Schwenkachse 41 - in einer senkrecht zu der Drosselkörper-Schwenkachse 41 verlaufenden Schnittebene entsprechend Fig. 4 betrachtet - keilförmig bzw. keilförmig erweiternd. Die Drosselstirnseite 46 ist zudem - in der Schnittebene entsprechend Fig. 4 betrachtet - zu der Drosselkörper-Schwenkachse 41 hin gekrümmt ausgebildet. Hierdurch wird in der in Fig. 4 dargestellten Minimaldrosselstellung des Drosselkörpers 38 ein minimaler Strömungswiderstand erzielt.

Der Durchgangskanal 36 weist eine sich verändernde Querschnittsfläche A auf. An einer Eingangsöffnung 48 weist der Durchgangskanal 36 eine Querschnittsfläche A₁ auf. Die Querschnittsfläche A des Durchgangskanals 36 vergrößert sich ausgehend von der Eintrittsöffnung 48 bis zu einer maximalen Querschnittsfläche Aₘₐₓ. Die maximale Querschnittsfläche Aₘₐₓ liegt in einer Schnittebene vor, die durch die Drosselkörper-Schwenkachse 41 verläuft und senkrecht zu der Förderrichtung 5 angeordnet ist. Ausgehend von der maximalen Querschnittsfläche Aₘₐₓ verringert sich die Querschnittsfläche A des Durchgangskanals 36 wieder, bis an einer Austrittsöffnung 49 eine Querschnittsfläche A₃ vorliegt. Für die Querschnittsfläche A₃ kann gelten: A₃ ≥ A₁ oder A₃ ≤ A₁.

An der Eintrittsöffnung 48 ist die Querschnittsfläche A₁ gleich einer freien Strömungsquerschnittsfläche A₁. In der in Fig. 4 veranschaulichten Minimaldrosselstellung ergibt sich im Bereich des Drosselkörpers 38 eine freie Strömungsquerschnittsfläche A₂, die sich aus der Differenz der Querschnittsfläche A und der Querschnittsfläche des Drosselkörpers 38 ergibt. Die freie Strömungsquerschnittsfläche A₂ ist in Fig. 4 beispielhaft im Bereich der maximalen Querschnittsfläche Aₘₐₓ veranschaulicht. Für die freie Strömungsquerschnittsfläche A₂ entlang des Drosselkörpers 38 gilt: 0,5 ≤ A₂/A₁ ≤ 1,3, insbesondere 0,6 ≤ A₂/A₁ ≤ 1,2, insbesondere 0,7 ≤ A₂/A₁ ≤ 1, 1 und insbesondere 0,8 ≤ A₂/A₁ ≤ 0,9.

Nachfolgend ist die Funktionsweise der Anlage 1 und der Anfahrventil-Drossel-Vorrichtung 4 beschrieben:
Zum Anfahren der Schneckenmaschine 3 wird die Anfahrventil-Drossel-Vorrichtung 4 so betätigt, dass sich der Schaltkörper 26 in der in Fig. 2 dargestellten Ausschleusstellung befindet. Mittels der Dosiereinrichtung 22 wird der Schneckenmaschine 3 Schüttgut 2 zugeführt, das in der Schneckenmaschine 3 zu der Schmelze 23 aufgeschmolzen wird. Die Schmelze 23 wird während des Anfahrvorgangs mittels der Anfahrventil-Drossel-Vorrichtung 4 ausgeschleust, bis eine gewünschte Qualität der Schmelze 23 erreicht ist. Die Schmelze 23 strömt hierzu durch den Eintrittskanal 33 und den Ausschleuskanal 34 und wird durch die Ausschleusöffnung 35 in die Umgebung abgeführt. Dies ist in Fig. 2 veranschaulicht.

Ist die gewünschte Qualität der Schmelze 23 erreicht, so wird der Schaltkörper 26 von der Ausschleusstellung in die in Fig. 3 veranschaulichte Austragsstellung verlagert. Hierzu wird der Schaltkörper 26 mittels des Schaltkörper-Antriebs 27 um 90° um die Schaltkörper-Verlagerungsachse 28 verschwenkt, so dass der Durchgangskanal 36 den Eintrittskanal 33 mit dem Austragskanal 37 verbindet. Der Drosselkörper 38 wird bereits in der Ausschleusstellung in eine gewünschte Drosselstellung, beispielsweise in die Minimaldrosselstellung, verschwenkt. Befindet sich der Drosselkörper 38 in der Ausschleusstellung des Schaltkörpers 26 in der Minimaldrosselstellung, so befindet sich der Drosselkörper 38 ohne ein Verschwenken auch in der Austragsstellung des Schaltkörpers 26 in der Minimaldrosselstellung. Die Schmelze 23 wird durch den Eintrittskanal 33, den Durchgangskanal 36 und den Austragskanal 37 gefördert und aus der Anfahrventil-Drossel-Vorrichtung 4 ausgetragen. Die Schmelze 23 wird anschließend beispielsweise einer Granuliereinrichtung zugeführt.

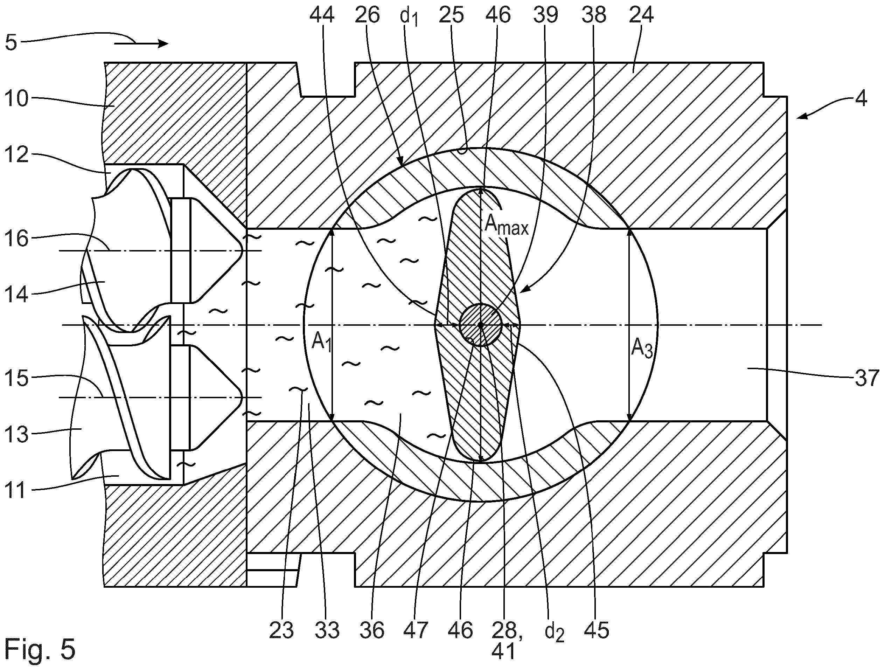

In der Austragsstellung des Schaltkörpers 26 kann die Strömung der Schmelze 23 bei Bedarf mittels des Drosselkörpers 38 gedrosselt werden. Hierzu wird der Drosselkörper 38 mittels des Drosselkörper-Antriebs 40 um die Drosselkörper-Schwenkachse 41 verschwenkt, so dass die freie Strömungsquerschnittsfläche A₂ im Vergleich zu der Minimaldrosselstellung reduziert wird. In der in Fig. 5 dargestellten Maximaldrosselstellung verschließt der Drosselkörper 38 den Durchgangskanal 36 im Wesentlichen vollständig. Durch die exzentrische Anordnung des Drosselkörpers 38 an der Drosselkörper-Antriebswelle 39 werden die in der Strömungsrichtung der Schmelze 23 bzw. die in der Förderrichtung 5 wirkenden Druckkräfte zuverlässig aufgenommen.

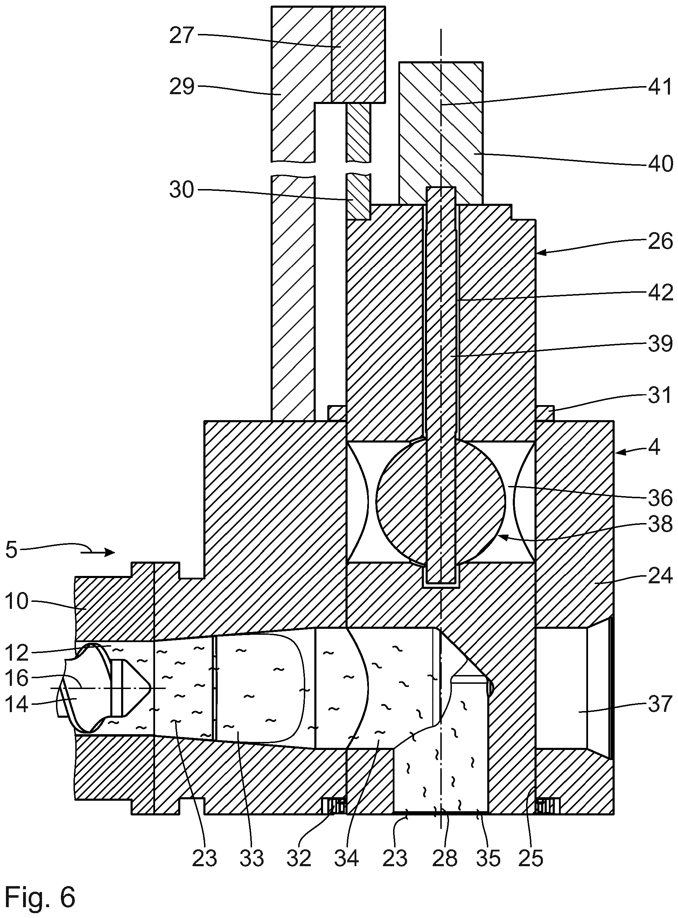

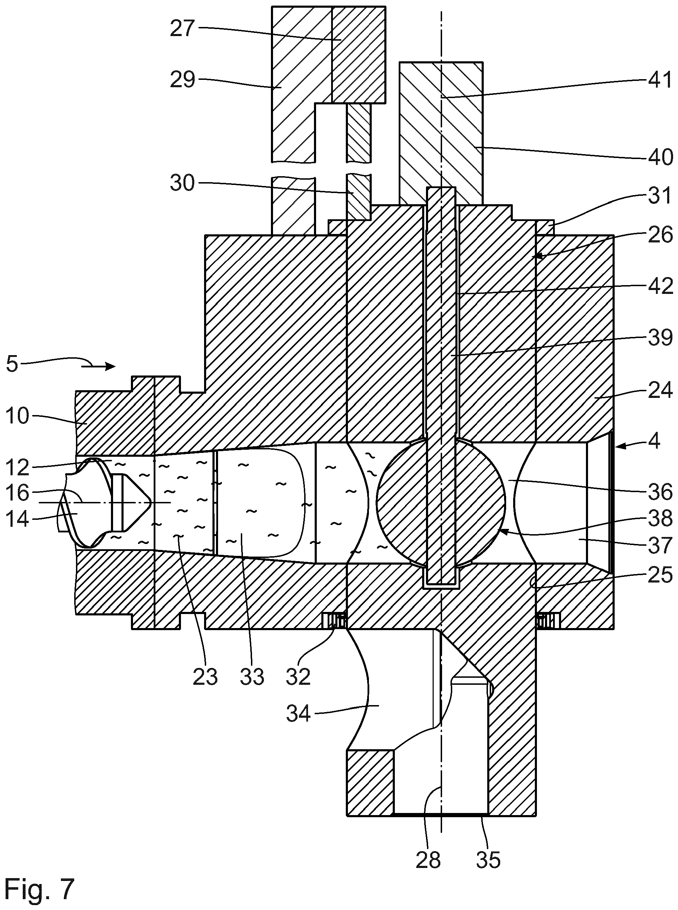

Nachfolgend ist anhand der Fig. 6 und 7 ein zweites Ausführungsbeispiel der Erfindung beschrieben. Im Unterschied zu dem ersten Ausführungsbeispiel ist der Schaltkörper 26 in der Gehäuseausnehmung 25 entlang der Schaltkörper-Verlagerungsachse 28 linear mittels des Schaltkörper-Antriebs 27 verlagerbar. Fig. 6 veranschaulicht die Anfahrventil-Drossel-Vorrichtung 4 in der Ausschleusstellung des Schaltkörpers 26. Zum Umschalten zwischen der Ausschleusstellung und der Austragsstellung wird der Schaltkörper 26 linear entlang der Schaltkörper-Verlagerungsachse 28 mittels des Schaltkörper-Antriebs 27 verlagert, bis der Durchgangskanal 36 den Eintrittskanal 33 mit dem Austragskanal 37 verbindet. Die Austragsstellung ist in Fig. 7 veranschaulicht. In der Austragsstellung ist der Drosselkörper 38 in der bereits beschriebenen Weise um die Drosselkörper-Schwenkachse 41 verschwenkbar, so dass die Strömung der Schmelze 23 in der gewünschten Weise gedrosselt werden kann. Hinsichtlich des weiteren Aufbaus und der weiteren Funktionsweise wird auf das erste Ausführungsbeispiel verwiesen.

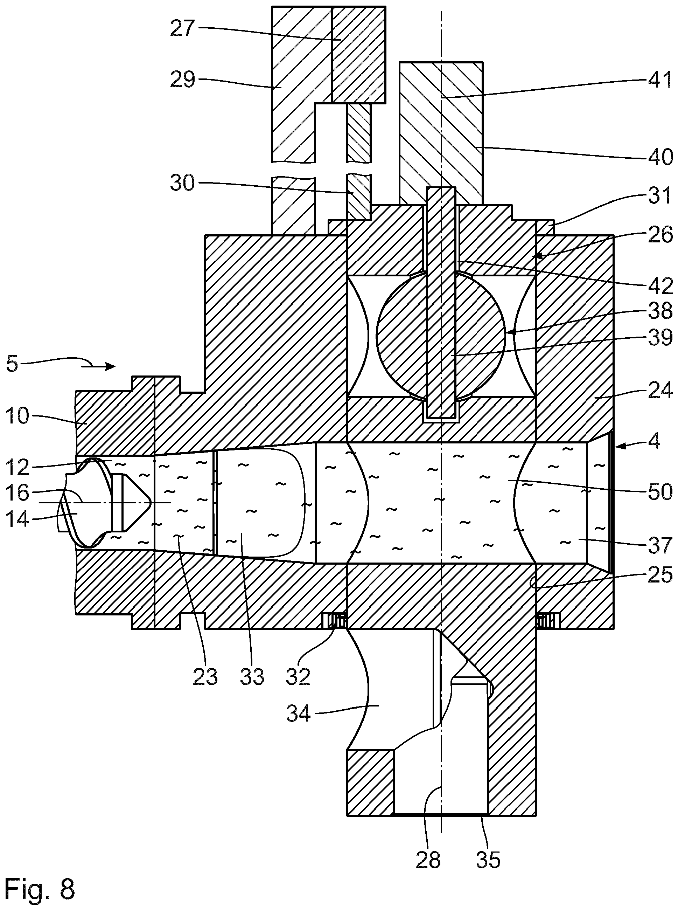

Nachfolgend ist anhand von Fig. 8 ein drittes Ausführungsbeispiel der Erfindung beschrieben. Im Unterschied zu den vorangegangenen Ausführungsbeispielen ist in dem Schaltkörper 26 ein freier Durchgangskanal 50 ausgebildet, in dem - im Unterschied zu dem Durchgangskanal 36 - kein Drosselkörper angeordnet ist. Der freie Durchgangskanal 50 ist zwischen dem Durchgangskanal 36 und dem Ausschleusskanal 34 ausgebildet. In einer ungedrosselten Austragsstellung, die in Fig. 8 veranschaulicht ist, verbindet der freie Durchgangskanal 50 den Eintrittskanal 33 mit dem Austragskanal 37. In der ungedrosselten Austragsstellung kann die Schmelze 23 im Wesentlichen ohne Druckverlust durch den freien Durchgangskanal 50 strömen, wodurch ein energieeffizienter Betrieb der Anlage 1 ermöglicht wird. Hinsichtlich des weiteren Aufbaus und der weiteren Funktionsweise wird auf die vorangegangenen Ausführungsbeispiele verwiesen.

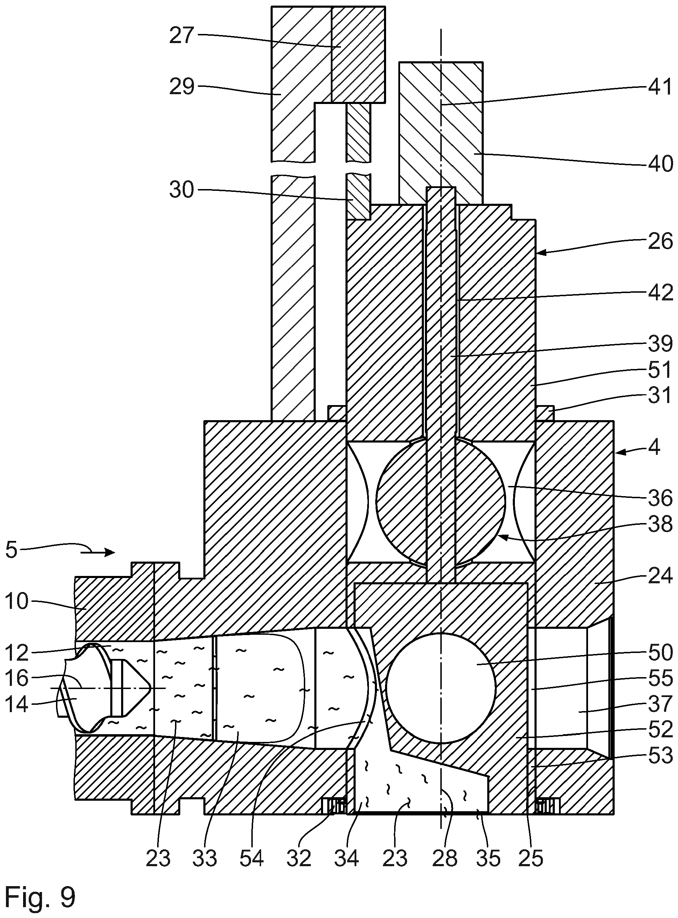

Nachfolgend ist anhand von Fig. 9 ein viertes Ausführungsbeispiel der Erfindung beschrieben. Im Unterschied zu den vorangegangenen Ausführungsbeispielen ist der Schaltkörper 26 zweiteilig ausgebildet. Der Schaltkörper 26 umfasst ein erstes Schaltkörper-Bauteil 51, das an einem dem Drosselkörper-Antrieb 40 abgewandten Ende hohlzylinderförmig ausgebildet ist und eine Aufnahme 53 für ein zylinderförmiges zweites Schaltkörper-Bauteil 52 ausbildet. Das zweite Schaltkörper-Bauteil 52 ist in der Aufnahme 53 um die Drosselkörper-Schwenkachse 41 verschwenkbar gelagert und mit der Drosselkörper-Antriebswelle 39 verbunden. In der Ausschleusstellung bilden die Schaltkörper-Bauteile 51, 52 den Ausschleuskanal 34 aus, der den Eintrittskanal 33 mit der Ausschleusöffnung 35 verbindet. Dies ist in Fig. 9 veranschaulicht. Zusätzlich ist in dem zweiten Schaltkörper-Bauteil 52 ein freier Durchgangskanal 50 ausgebildet, in dem kein Drosselkörper angeordnet ist. In einer ungedrosselten Austragsstellung ist das zweite Schaltkörper-Bauteil 52 relativ zu dem ersten Schaltkörper-Bauteil 51 verschwenkt, insbesondere um 90°, sodass der freie Durchgangskanal 50 den Eintrittskanal 33 mit dem Austragskanal 37 verbindet. Das Verschwenken des zweiten Schaltkörper-Bauteils 52 erfolgt mittels des Drosselkörper-Antriebs 40, der über die Drosselkörper-Antriebswelle 39 mit dem zweiten Schaltkörper-Bauteil 52 verbunden ist. Zum Ausbilden des Ausschleuskanals 34 und zum Ausbilden des freien Durchgangskanals 50 weist das erste Schaltkörper-Bauteil 51 in dem hohlzylinderförmigen Abschnitt eine Eintrittsöffnung 54 und eine Austrittsöffnung 55 auf. Der Durchgangskanal 36 und der Drosselkörper 38 sind in der bereits beschriebenen Weise in dem ersten Schaltkörper-Bauteil 51 ausgebildet bzw. angeordnet. Hinsichtlich des weiteren Aufbaus und der weiteren Funktionsweise wird auf die vorangegangenen Ausführungsbeispiele verwiesen.

Die erfindungsgemäße Anfahrventil-Drossel-Vorrichtung 4 ist einfach und kompakt aufgebaut und hat eine geringe Baulänge, so dass die Anfahrventil-Drossel-Vorrichtung 4 in einer Minimaldrosselstellung des Drosselkörpers 38 einen geringen Druckverlust verursacht. Hierdurch ist der erforderliche Energieeintrag in die Schmelze 23 vergleichsweise gering, so dass einerseits die Temperatur der Schmelze 23 reduziert und andererseits ein möglicher Drehzahlbereich der Schneckenmaschine 3 im Betrieb vergrößert wird. Der in der Schneckenmaschine 3 erforderliche Druck kann aufgrund des geringen Druckverlusts der Anfahrventil-Drossel-Vorrichtung 4 geringer sein, so dass der Verschleiß in der Schneckenmaschine 3 und in der Anfahrventil-Drossel-Vorrichtung 4 geringer ist und sich die Lebensdauer der Schneckenmaschine 3 und der Anfahrventil-Drossel-Vorrichtung 4 erhöht. Die Anfahrventil-Drossel-Vorrichtung 4 weist somit eine hohe Zuverlässigkeit auf.

Aufgrund des vergleichsweise geringen Druckverlusts der Schmelze 23 beim Durchströmen der Anfahrventil-Drossel-Vorrichtung 4 in der Minimaldrosselstellung bzw. in der ungedrosselten Austragsstellung ist die Anfahrventil-Drossel-Vorrichtung 4 im Betrieb energieeffizient und ermöglicht einen energieeffizienten Betrieb der Schneckenmaschine 3. Zudem ermöglicht die Anfahrventil-Drossel-Vorrichtung 4 eine Erhöhung des Durchsatzes. Auf eine nachgeordnete Schmelzepumpe zum Druckaufbau in der Schmelze 23 kann verzichtet werden. Vorzugsweise ist der Drosselkörper-Antrieb 40 mit dem Schaltkörper 26 verlagerbar, so dass sich die Relativposition des Drosselkörpers 38 und des Drosselkörper-Antriebs 40 zu dem Schaltkörper 26 beim Umschalten zwischen der Ausschleusstellung und der Austragsstellung nicht verändert. Alternativ kann der Drosselkörper-Antrieb 40 an dem Gehäuse 24 befestigt sein, so dass sich der Drossel-körper 38 relativ zu dem Schaltkörper 26 beim Umschalten zwischen der Ausschleusstellung und der Austragsstellung verlagert.

Vorzugsweise wird der Schaltkörper 26 im Betrieb wiederholt aus der Austragsstellung geringfügig verlagert, also geringfügig verschwenkt oder geringfügig linear verlagert und anschließend wieder in die Austragsstellung gebracht. Hierdurch wird vermieden, dass Schmelze 23, die während des Anfahrvorgangs in einen Spalt zwischen dem Schaltkörper 26 und dem Gehäuse 24 gelangt ist und dort über einen längeren Zeitraum verbleibt und im Spalt verhärtet, die Bewegung des Schaltkörpers 26 dauerhaft behindert. Durch das geringfügige Verlagern des Schaltkörpers 26 wird das aus dem Verhärten der Schmelze 23 entstandene Material in dem Spalt gelöst. Hierdurch wird die Zuverlässigkeit der Anfahrventil-Drossel-Vorrichtung 4 erhöht.

## Patentansprüche

1. Anfahrventil-Drossel-Vorrichtung zum Austragen einer Schmelze aus einer Schneckenmaschine mit
- einem Gehäuse (24) und einer darin ausgebildeten Gehäuseausnehmung (25),
- einem in dem Gehäuse (24) ausgebildeten und in die Gehäuseausnehmung (25) mündenden Eintrittskanal (33) zum Zuführen der Schmelze (23),
- einem in dem Gehäuse (24) ausgebildeten und in die Gehäuseausnehmung (25) mündenden Austragskanal (37) zum Austragen der Schmelze (23),
- einer Ausschleusöffnung (35) zum Ausschleusen der Schmelze (23) während eines Anfahrvorgangs der Schneckenmaschine (3), und
- einem Schaltkörper (26),
-- der in der Gehäuseausnehmung (25) angeordnet und zwischen einer Ausschleusstellung und einer Austragsstellung verlagerbar ist,
-- der zumindest abschnittsweise einen Ausschleuskanal (34) zum Verbinden des Eintrittskanals (33) mit der Ausschleusöffnung (35) in der Ausschleusstellung ausbildet,
-- der einen Durchgangkanal (36) zum Verbinden des Eintrittskanals (33) und des Austragskanals (37) in der Austragsstellung ausbildet,
- einem in dem Durchgangskanal (36) angeordneten Drosselkörper (38),
**dadurch gekennzeichnet,**
**dass** der Drosselkörper (38) relativ zu dem Schaltkörper (26) mittels eines Drosselkörper-Antriebs (40) verlagerbar und unabhängig von dem Schaltkörper (26) betätigbar ist.

2. Anfahrventil-Drossel-Vorrichtung nach Anspruch 1, **dadurch gekennzeichnet,**
**dass** der Drosselkörper (38) um eine Drosselkörper-Schwenkachse (41) verschwenkbar ist.

3. Anfahrventil-Drossel-Vorrichtung nach Anspruch 1 oder 2, **dadurch gekennzeichnet,**
**dass** der Drosselkörper-Antrieb (40) an dem Schaltkörper (26) befestigt ist.

4. Anfahrventil-Drossel-Vorrichtung nach mindestens einem der Ansprüche 1 bis 3, **dadurch gekennzeichnet,**
**dass** der Drosselkörper (38) an einer Drosselkörper-Antriebswelle (39) befestigt ist und sich die Drosselkörper-Antriebswelle (39) zumindest abschnittsweise durch den Schaltkörper (26) erstreckt.

5. Anfahrventil-Drossel-Vorrichtung nach einem der Ansprüche 1 bis 4, **dadurch gekennzeichnet,**
**dass** der Drosselkörper (38) zur Aufnahme von in einer Strömungsrichtung der Schmelze (23) wirkenden Druckkräften exzentrisch an einer Drosselkörper-Antriebswelle (39) befestigt ist.

6. Anfahrventil-Drossel-Vorrichtung nach einem der Ansprüche 1 bis 5, **dadurch gekennzeichnet,**
**dass** der Durchgangskanal (36) von einer Eintrittsöffnung (48) bis zu einer Drosselkörper-Schwenkachse (41) des Drosselkörpers (38) zumindest abschnittsweise eine sich vergrößernde Querschnittfläche (A) hat.

7. Anfahrventil-Drossel-Vorrichtung nach einem der Ansprüche 1 bis 5, **dadurch gekennzeichnet,**
**dass** der Durchgangskanal (36) an einer Eintrittsöffnung (48) eine freie Strömungsquerschnittfläche A₁ hat und in einer Minimaldrosselstellung des Drosselkörpers (38) für eine freie Strömungsquerschnittfläche A₂ entlang des Drosselkörpers (38) gilt: 0,5 ≤ A₂/A₁ ≤ 1,3, insbesondere 0,6 ≤ A₂/A₁ ≤ 1,2, insbesondere 0,7 ≤ A₂/A₁ ≤ 1, 1 und insbesondere 0,8 ≤ A₂/A₁ ≤ 0,9.

8. Anfahrventil-Drossel-Vorrichtung nach einem der Ansprüche 1 bis 7, **dadurch gekennzeichnet,**
**dass** der Schaltkörper (26) mittels eines Schaltkörper-Antriebs (27) verlagerbar ist.

9. Anfahrventil-Drossel-Vorrichtung nach einem der Ansprüche 1 bis 8, **dadurch gekennzeichnet,**
**dass** der Schaltkörper (26) eine Schaltkörper-Verlagerungsachse (28) ausbildet.

10. Anfahrventil-Drossel-Vorrichtung nach Anspruch 9, **dadurch gekennzeichnet,**
**dass** die Drosselkörper-Schwenkachse (41) und die Schaltkörper-Verlagerungsachse (28) parallel, insbesondere konzentrisch, zueinander verlaufen.

11. Anfahrventil-Drossel-Vorrichtung nach Anspruch 9 oder 10, **dadurch gekennzeichnet,**
**dass** der Schaltkörper (26) um die Schaltkörper-Verlagerungsachse (28) verschwenkbar ist.

12. Anfahrventil-Drossel-Vorrichtung nach einem der Ansprüche 9 bis 11, **dadurch gekennzeichnet,**
**dass** der Schaltkörper (26) entlang der Schaltkörper-Verlagerungsachse (28) linear verlagerbar ist.

13. Anfahrventil-Drossel-Vorrichtung nach einem der Ansprüche 1 bis 12, **dadurch gekennzeichnet,**
**dass** in dem Schaltkörper (26) ein freier Durchgangskanal (50) zum Verbinden des Eintrittskanals (33) und des Austragskanals (37) in einer ungedrosselten Austragsstellung ausgebildet ist.

14. Anlage zur Aufbereitung von Schüttgut mit
- einer Schneckenmaschine (3) zum Aufschmelzen des Schüttguts (2) und Bereitstellen einer Schmelze (23) und
- einer Anfahrventil-Drossel-Vorrichtung (4) nach einem der Ansprüche 1 bis 13.

15. Verfahren zum Austragen einer Schmelze aus einer Schneckenmaschine mittels einer Anfahrventil-Drossel-Vorrichtung mit den Schritten:
- Bereitstellen einer Anfahrventil-Drossel-Vorrichtung (4) nach einem der Ansprüche 1 bis 13,
- Verlagern des Schaltkörpers (26) aus einer Ausschleusstellung in eine Austragsstellung,
- Austragen von Schmelze (23) durch den Durchgangskanal (36) des Schaltkörpers (26) und den Austragskanal (37), und
- Verschwenken des Drosselkörpers (38) in dem Durchgangskanal (36) relativ zu dem Schaltkörper (26) mittels des Drosselkörper-Antriebs (40).

16. Verfahren nach Anspruch 15, **dadurch gekennzeichnet,**
**dass** der in der Austragsstellung befindliche Schaltkörper (26) wiederholt verlagert wird, um ein Blockieren des Schaltkörpers (26) aufgrund von Schmelze (23), die zwischen den Schaltkörper (26) und das Gehäuse (24) gelangt ist, zu vermeiden.

## Claims

1. Starting-valve throttle device for delivery a melt from a screw extruder, having
- a housing (24) and a housing recess (25) configured therein,
- an entry duct (33) for feeding the melt (23), said entry duct (33) being configured in the housing (24) and opening into the housing recess (25),
- a delivery duct (37) for delivering the melt (23), said delivery duct (37) being configured in the housing (24) and opening into the housing recess (25),
- an evacuation opening (35) for delivering the melt (23) during a starting procedure of the screw extruder (3), and
- a switching member (26),
-- which is disposed in the housing recess (25) and is repositionable between an evacuation position and a delivery position,
-- which in the evacuation position at least in portions configures an evacuation duct (34) for connecting the entry duct (33) to the evacuation opening (35),
-- which in the delivery position configures a passage duct (36) for connecting the entry duct (33) to the delivery duct (37),
- a throttle member (38) arranged in the passage duct (36),
**characterized in**
**that** the throttle member (38) is repositionable relative to the switching member (26) by means of a throttle member drive (40) and can be actuated independently of the switching member (26).

2. Starting-valve throttle device according to claim 1, **characterized in**
**that** the throttle member (38) is pivotable about a throttle-member pivot axis (41).

3. Starting-valve throttle device according to claim 1 or 2, **characterized in**
**that** the throttle member drive (40) is fastened to the switching member (26).

4. Starting-valve throttle device according to at least one of claims 1 to 3, **characterized in**
**that** the throttle member (38) is fastened to a throttle-member driveshaft (39), and the throttle-member driveshaft (39) at least in portions extends through the switching member (26).

5. Starting-valve throttle device according to one of claims 1 to 4, **characterized in**
**that** the throttle member (38) for absorbing compressive forces that act in a flow direction of the melt (23) is fastened so as to be eccentric on a throttle-member driveshaft (39).

6. Starting-valve throttle device according to one of claims 1 to 5, **characterized in**
**that** the passage duct (36) from an entry opening (48) to a throttle-member pivot axis (41) of the throttle member (38) has, at least in portions, a cross section area (A) that increases in size.

7. Starting-valve throttle device according to one of claims 1 to 5, **characterized in**
**that** the passage duct (36) at an entry opening (48) has an available flow cross section area A₁, and in a minimum throttle position of the throttle member (38) the following applies to an available flow cross section area A₂ along the throttle member (38): 0.5 ≤ A₂/A₁ ≤ 1.3, in particular 0.6 ≤ A₂/A₁ ≤ 1.2, in particular 0.7 ≤ A₂/A₁ ≤ 1.1, and in particular 0.8 ≤ A₂/A₁ ≤ 0.9.

8. Starting-valve throttle device according to one of claims 1 to 7, **characterized in**
**that** the switching member (26) is repositionable by means of a switching-member drive (27).

9. Starting-valve throttle device according to one of claims 1 to 8, **characterized in**
**that** the switching member (26) configures a switching-member repositioning axis (28).

10. Starting-valve throttle device according to claim 9, **characterized in**
**that** the throttle-member pivot axis (41) and the switching-member repositioning axis (28) run so as to be mutually parallel, in particular so as to be mutually concentric.

11. Starting-valve throttle device according to claim 9 or 10, **characterized in**
**that** the switching member (26) is pivotable about the switching-member repositioning axis (28).

12. Starting-valve throttle device according to one of claims 9 to 11, **characterized in**
**that** the switching member (26) is repositionable in a linear manner along the switching-member repositioning axis (28).

13. Starting-valve throttle device according to one of claims 1 to 12, **characterized in**
**that** in a non-throttled delivery position an available passage duct (50) for connecting the entry duct (33) and the delivery duct (37) is configured in the switching member (26).

14. System for preparing bulk material, having
- a screw extruder (3) for melting the bulk material (2) and providing a melt (23); and
- a starting-valve throttle device (4) according to one of claims 1 to 13.

15. Method for delivering a melt from a screw extruder by means of a starting-valve throttle device, said method comprising the following steps:
- providing a starting-valve throttle device (4) according to one of claims 1 to 13,
- repositioning the switching member (26) from an evacuation position to a delivery position;
- delivering melt (23) through the passage duct (36) of the switching member (26) and the delivery duct (37); and
- pivoting the throttle member (38) relative to the switching member (26) in the passage duct (36) by means of the throttle member drive (40).

16. Method according to claim 15, **characterized in**
**that** the switching member (26) situated in the delivery position is repeatedly repositioned so as to avoid any blocking of the switching member (26) by virtue of melt (23) which has made its way between the switching member (26) and the housing (24).

## Revendications

1. Dispositif de soupape de démarrage et d'étranglement permettant de décharger une masse fondue d'une machine à vis sans fin, comprenant
- un logement (24) et un évidement de logement (25) qui y est formé,
- un conduit d'entrée (33) formé dans le logement (24) et débouchant dans l'évidement de logement (25) pour amener la masse fondue (23),
- un conduit de décharge (37), formé dans le logement (24) et débouchant dans l'évidement de logement (25), pour décharger la masse fondue (23)
- une ouverture d'évacuation (35) pour évacuer la masse fondue (23) pendant un processus de démarrage de la machine à vis sans fin (3), et
- un élément de commutation (26),
-- qui est disposé dans l'évidement du logement (25) et qui peut être déplacé entre une position d'évacuation et une position de déchargement,
-- qui forme, au moins en sections, un conduit d'évacuation (34) pour relier le conduit d'entrée (33) à l'ouverture d'évacuation (35) dans la position d'évacuation,
-- qui forme un conduit de passage (36) pour relier le conduit d'entrée (33) et le conduit de décharge (37) dans la position de déchargement,
- un élément d'étranglement (38) disposé dans le conduit de passage (36),
**caractérisé en**
**ce que** l'élément d'étranglement (38) peut être déplacé par rapport à l'élément de commutation (26) par le biais d'un entraînement de l'élément d'étranglement (40) et peut être actionné indépendamment de l'élément de commutation (26).

2. Dispositif de soupape de démarrage et d'étranglement selon la revendication 1, **caractérisé en**
**ce que** l'élément d'étranglement (38) peut être pivoté autour d'un axe de pivotement d'élément d'étranglement (41).

3. Dispositif de soupape de démarrage et d'étranglement selon la revendication 1 ou 2, **caractérisé en**
**ce que** l'entraînement de l'élément d'étranglement (40) est fixé sur l'élément de commutation (26).

4. Dispositif de soupape de démarrage et d'étranglement selon au moins une des revendications 1 à 3, **caractérisé en**
**ce que** l'élément d'étranglement (38) est fixé sur un arbre d'entraînement d'élément d'étranglement (39), et que l'arbre d'entraînement d'élément d'étranglement (39), au moins en sections, s'étend au travers de l'élément de commutation (26).

5. Dispositif de soupape de démarrage et d'étranglement selon l'une quelconque des revendications 1 à 4, **caractérisé en**
**ce que** l'élément d'étranglement (38) est fixé de manière excentrique sur l'arbre d'entraînement d'élément d'étranglement (39) pour absorber des forces de pression agissant dans une direction d'écoulement de la masse fondue (23).

6. Dispositif de soupape de démarrage et d'étranglement selon l'une quelconque des revendications 1 à 5, **caractérisé en**
**ce que** le conduit de passage (36) a une section transversale (A) qui s'agrandit, au moins par sections, depuis une ouverture d'entrée (48) jusqu'à un axe de pivotement d'élément d'étranglement (41) de l'élément d'étranglement (38).

7. Dispositif de soupape de démarrage et d'étranglement selon l'une quelconque des revendications 1 à 5, **caractérisé en**
**ce que** le conduit de passage (36) présente une section de passage libre A1 au niveau d'une ouverture d'entrée (48) et, dans une position d'étranglement minimale de l'élément d'étranglement (38), pour une section de passage libre A2 le long de l'élément d'étranglement (38), on a : 0,5 ≤ A2/A1 ≤ 1,3, en particulier 0,6 ≤ A2/A1 ≤ 1,2, en particulier 0,7 ≤ A2/A1 ≤ 1,1 et en particulier 0,8 ≤ A2/A1 ≤ 0,9.

8. Dispositif de soupape de démarrage et d'étranglement selon l'une quelconque des revendications 1 à 7, **caractérisé en**
**ce que** l'élément de commutation (26) peut être déplacé par le biais d'un entraînement d'élément de commutation (27).

9. Dispositif de soupape de démarrage et d'étranglement selon l'une quelconque des revendications 1 à 8, **caractérisé en**
**ce que** l'élément de commutation (26) forme un axe de déplacement d'élément de commutation (28).

10. Dispositif de soupape de démarrage et d'étranglement selon la revendication 9, **caractérisé en**
**ce que** l'axe de pivotement d'élément d'étranglement (41) et l'axe de déplacement d'élément de commutation (28) sont parallèles, en particulier concentriques, l'un par rapport à l'autre.

11. Dispositif de soupape de démarrage et d'étranglement selon la revendication 9 ou 10, **caractérisé en**
**ce que** l'élément de commutation (26) peut être pivoté autour l'axe de déplacement d'élément de commutation (28).

12. Dispositif de soupape de démarrage et d'étranglement selon l'une quelconque des revendications 9 à 11, **caractérisé en**
**ce que** l'élément de commutation (26) peut être déplacé de manière linéaire le long de l'axe de déplacement d'élément de commutation (28).

13. Dispositif de soupape de démarrage et d'étranglement selon l'une quelconque des revendications 1 à 12, **caractérisé en**
**ce que** un conduit de passage libre (50) est formé dans l'élément de commutation (26) pour relier le conduit d'entrée (33) et le conduit de sortie (37) dans une position de déchargement non étranglée.

14. Installation pour la préparation de matières en vrac, comprenant
- une machine à vis sans fin (3) pour fondre la matière en vrac (2) et fournir une masse fondue (23) ; et
- un dispositif de soupape de démarrage et d'étranglement (4) selon l'une quelconque des revendications 1 à 13.

15. Procédé pour décharger une masse fondue d'une machine à vis sans fin par le biais d'un dispositif de soupape de démarrage et d'étranglement, ledit procédé comprenant les étapes suivantes :
- mise à disposition d'un dispositif de soupape de démarrage et d'étranglement (4) selon l'une quelconque des revendications 1 à 13,
- déplacement de l'élément de commutation (26) depuis une position d'évacuation dans une position de déchargement;
- déchargement de masse fondue (23) au travers du conduit de passage (36) de l'élément de commutation (26) et du conduit de sortie (37); et
- pivotement de l'élément d'étranglement (38) dans le conduit de passage (36) par rapport à l'élément de commutation (26) par le biais de l'entraînement de l'élément d'étranglement (40).

16. Procédé selon la revendication 15, **caractérisé en**
**ce que** l'élément de commutation (26), qui est en position de déchargement, est déplacé à plusieurs reprises afin d'éviter le blocage de l'élément de commutation (26) en raison de masse fondue (23) qui se trouve entre l'élément de commutation (26) et le logement (24).
